**Europäisches Patentamt**

**European Patent Office**

**Office européen des brevets**

(11) Numéro de publication: **0 198 772**
**B1**

## FASCICULE DE BREVET EUROPEEN

(45) Date de publication du fascicule du brevet:
**19.04.89**

(51) Int. Cl.⁴: **B60R 25/02**

(21) Numéro de dépôt: **86420067.0**

(22) Date de dépôt: **05.03.86**

(54) Accessoire antivol articulé pour véhicules à moteur et à volant.

(30) Priorité: **18.03.85 FR 8504158**
**04.12.85 FR 8518147**

(43) Date de publication de la demande:
**22.10.86 Bulletin 86/43**

(45) Mention de la délivrance du brevet:
**19.04.89 Bulletin 89/16**

(84) Etats contractants désignés:
**AT BE CH DE GB IT LI LU NL**

(56) Documents cités:
**FR-A- 622 399**
**FR-A- 929 857**
**FR-A- 942 601**
**FR-A- 1 378 580**
**FR-A- 2 185 177**
**FR-A- 2 446 204**
**FR-A- 2 487 752**
**FR-A- 2 525 540**
**FR-E- 33 061**
**GB-A- 941 212**
**GB-A- 1 107 012**
**GB-A- 1 554 593**
**US-A- 3 190 090**
**US-A- 3 550 409**

(73) Titulaire: **Carrie, Marcel, 19, boulevard de la République,
F-69410 Champagne au Mt d'Or(FR)**

(72) Inventeur: **Carrie, Marcel, 19, boulevard de la
République, F-69410 Champagne au Mt d'Or(FR)**

(74) Mandataire: **Schmitt, John, Cabinet John Schmitt 9, rue
Pizay, F-69001 Lyon(FR)**

ACTORUM AG

**Description**

La présente invention concerne un accessoire antivol articulé permettant de bloquer la manœuvre du volant de direction et d'une pédale de commande des véhicules à moteur et à volant par une liaison mécanique constituée d'un cadenas antivol sur l'arceau duquel s'articule une barre métallique à usage de crochet et munie d'une boucle fermée. Un accessoire antivol selon le préambule de la revendication 1 est décrit dans le GB-A 941 212.

Les dispositifs antivols analogues de véhicules déjà existants sont commercialisés sous le nom de cannes antivol constituées, sauf informations contraires, par deux tiges métalliques rectilignes non pliables mais rectractables télescopiquement dont l'extrémité inférieure est munie d'un crochet de 80 à 90 mm de profondeur, incliné, destiné à être ancré à une pédale de commande et dont l'extrémité supérieure est munie aussi d'un crochet mais destiné à être ancré au volant, les deux tiges étant alors verrouillées par une serrure intermédiaire. Ces cannes antivol sont fabriquées dans un acier qui n'est pas apparemment traité thermiquement et la dureté superficielle des tiges et crochets n'offre donc pas une résistance satisfaisante à leur sectionnement éventuel; leur longueur et leur rigidité ne permettent pas d'augmenter la profondeur du crochet sur pédale qui doit rester limitée pour permettre la pose du dispositif malgré l'inclinaison du crochet, et leur conception ne permet pas d'utiliser les systèmes de fermeture des cadenas antivols en U de motocycles avec arceau en acier traité généralement par cémentation et réputés comme étant très efficaces: l'accessoire antivol articulé selon l'invention permet de remédier à ces inconvénients.

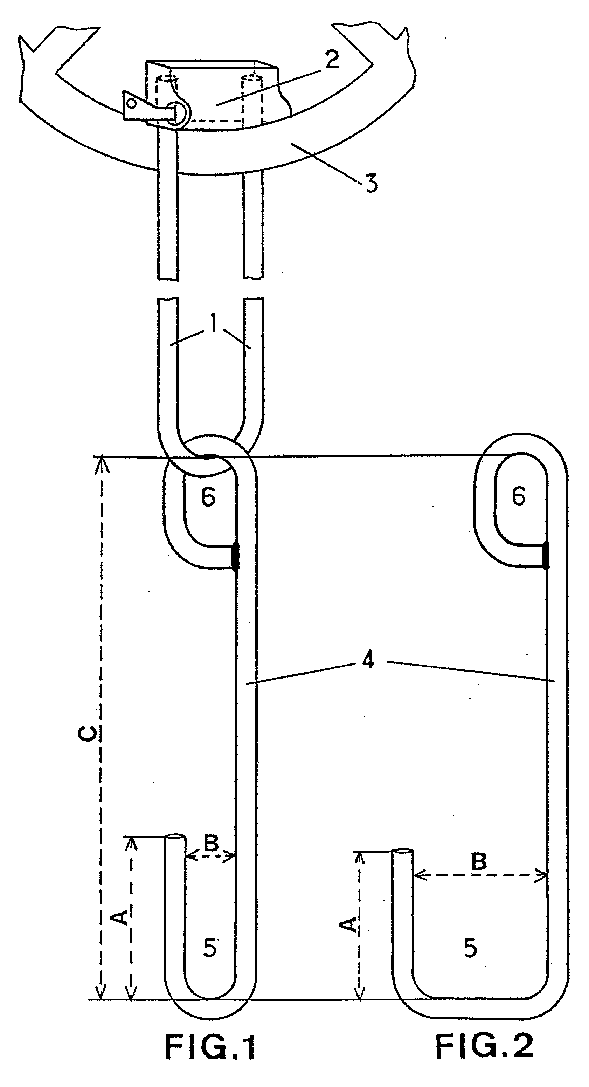

Suivant l'invention de base représentée par la figure 1 dessinée à l'échelle de 1 mm pour 2,5 mm comme les autres figures 2 à 5, la liaison mécanique est constituée par un cadenas antivol du commerce dont l'arceau est une tige métallique rigide 1 recourbée en forme de U et pouvant être fermé par une serrure 2 de type connu sur le bas de la jante du volant 3, et par une barre métallique rectiligne 4 dont l'extrêmité inférieure est façonnée en forme de crochet 5 destiné à être ancré à une pédale de commande et dont l'extrémité supérieure est façonnée dans le même plan que le crochet 5, en forme de boucle fermée 6 qui est traversée et maintenue par la base cintrée de l'arceau du cadenas constituant l'axe d'articulation du dispositif.

De préférence, le cadenas à utiliser pour réaliser un dispositif approprié d'accessoire antivol articulé de véhicules est un cadenas de la forme de ceux commercialisés à usage d'antivol U de motocycles, et la figure 1 représente une vue en perspective d'un tel cadenas à simple fermeture avec tiges 1 de l'arceau en acier rond de 12 mm de diamètre espacées de 60 mm d'axe en axe, d'une profondeur utile fixée à 340 mm pour les besoins de la description, avec un seul cran recevant le pêne de la serrure 2.

La section de la barre métallique 4 à usage de crochet la mieux appropriée donc préférentielle, est de forme ronde et le diamètre de la barre est de préférence le même que celui des tiges 1 de l'arceau du cadenas pour être efficace, c'est-à-dire être compris entre 8 et 16 mm, en tant que ce diamètre reste compatible avec les contraintes techniques de cintrage. Mais toutes autres formes ou sections de tiges métalliques peuvent être utilisées au titre de la présente invention.

Le diamètre intérieur de la boucle fermée 6 est supérieur à celui des tiges 1 de l'arceau du cadenas, de façon à ménager un jeu suffisant pour faire coulisser, enlever, remettre ou articuler comme un cardan la barre métallique 4 à usage de crochet.

Le crochet 5 de la figure 1, vu en plan vertical, est destiné à être accroché au levier d'une pédale de commande du véhicule de façon qu'il vienne buter contre le méplat caoutchouté de cette pédale; en variante, si la conception du véhicule le permet, le crochet 5 de la figure 2, d'une ouverture plus large, peut être accroché à la fois à la colonne de direction et au levier de la pédale de commande la plus proche. La pédale préférentielle et la mieux adaptée est celle des freins du véhicule.

Le crochet 5 est façonné en forme de U. Pour un crochet destiné à être ancré seulement à une pédale suivant la figure 1, sa profondeur utile A est comprise entre 90 et 150 mm, pour une ouverture B de 20 à 30 mm de largeur; cette profondeur A n'est pas limitée par l'espace vertical disponible sous le levier de pédale, contrairement à la profondeur du crochet des cannes antivol rigides, car le crochet 5 peut être glissé horizontalement sous la pédale grâce à son articulation sur l'arceau du cadenas, et sa longueur supérieure à 90 mm supprime les risques de son décrochage par torsion du volant; par contre, l'ouverture B du même crochet est limitée par les dimensions du butoir constitué par le méplat caoutchouté de la pédale.

Pour un crochet destiné à être accroché à la fois à la colonne de direction et à une pédale suivant la figure 2, sa profondeur utile A préférentielle est de l'ordre de 90 mm et son ouverture utile B préférentielle est de l'ordre de 80 mm de largeur, mais dans ce cas, le crochet 5 est de forme carrée avec ses deux angles arrondis; sa profondeur utile A est limitée par l'espace disponible derrière la colonne de direction et le levier de pédale.

La longueur utile C de la barre métallique 4 est fonction, d'une part de la distance comprise entre le bas de la jante du volant 3 et la pédale ou la colonne de direction à solidariser, et d'autre part de la profondeur de l'arceau du modèle de cadenas utilisé. Du fait qu'il est possible de fabriquer des cadenas à arceau de profondeurs extrêmement variables, la longueur maximale utile C de cette barre métallique à usage de crochet est limitée par la distance volant-pédale du véhicule à protéger contre le vol, en cas d'utilisation d'un cadenas à arceau d'une profondeur de quelques centimètres seulement. A titre indicatif, cette distance est le plus souvent comprise entre 650 et 700 mm, et selon la forme de réalisation préférentielle faisant l'objet de la figure 1, la longueur utile C retenue de la barre métallique est de 330 mm de façon que le système antivol présente une longueur totale utile de 340 + 330 = 670 mm, et qu'une fois plié il présente la même longueur que le cadenas antivol en U qui lui est associé, pour qu'il puisse être facilement logé dans le véhicule ou transporté dans une housse par exemple, qui aurait 400 mm de longueur seulement, contre 550 mm environ pour une canne antivol retractée.

Le façonnage et le traitement en dureté de la barre métallique 4 s'effectue suivant les techniques appliquées à la fabrication de l'arceau du cadenas, donc pratiquement sans investissements nouveaux pour un fabricant de cadenas.

Compte-tenu des contraintes précitées, certains modèles de voitures à garantir contre le vol peuvent nécessiter le façonnage d'un modèle spécifique de barre métallique 4 à usage de crochet, tandis que le modèle de cadenas retenu, d'une fabrication plus coûteuse, reste polyvalent pour toutes les voitures.

Mais l'étude du marché pourra faire apparaître que certains modèles de barre métallique 4 à usage de crochet pourront être polyvalents pour plusieurs modèles de voitures. Ainsi, il apparaît que la barre métallique destinée à être accrochée seulement à une pédale suivant la figure 1 a, pour un modèle de cadenas unique, la même dimension valable pour plusieurs voitures de marques différentes dont la distance volant-pédale est de 670 mm.

La mise en place du système d'une longueur totale utile adaptée au modèle de véhicule s'effectue en ancrant d'abord le crochet 5 sous le levier de pédale ou à la fois derrière la colonne de direction et le levier de pédale le plus proche puis, grâce à l'articulation, en amenant par dessous, les deux tiges 1 de l'arceau du cadenas de chaque côté de la jante ou d'un rayon du volant 3 de façon à fermer le cadenas par dessus, le véhicule étant arrêté.

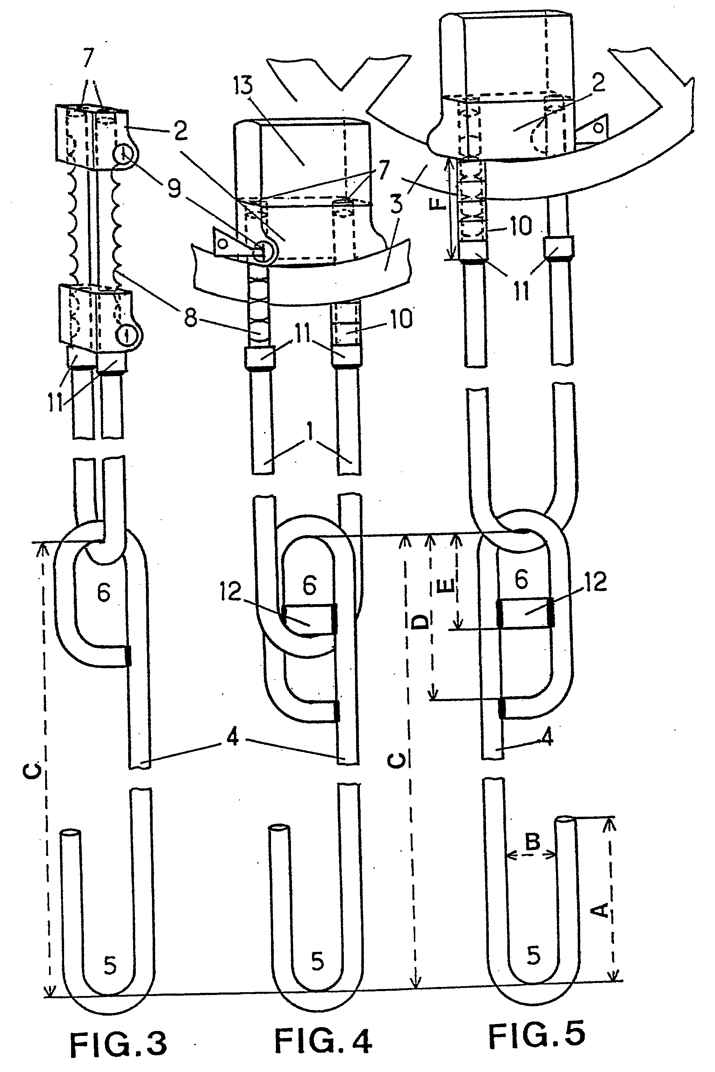

Mais des modifications peuvent être apportées aux véhicules, par exemple en remplaçant le volant d'origine par un petit volant, ce qui modifie la distance volant-pédale et le système ci-dessus peut être perfectionné davantage par la variante décrite ci-après faisant l'objet des figures 3, 4 et 5 afin de le rendre réglable en longueur, c'est-à-dire de le rendre polyvalent et mieux commercialisable par un perfectionnement à apporter au cadenas antivol en ouvrant complètement, dans la serrure 2, les trous 7 de tiges d'arceau et en augmentant le nombre des crans 8 entaillés dans ces tiges, combiné avec une modification de la boucle 6 de la barre métallique 4 à usage de crochet, ou le remplacement de la barre métallique par un système fileté et taraudé avec boucle et crochet.

Les serrures 2 formant moyens de fermeture des cadenas antivol U de motocycles actuellement commercialisés sont de plusieurs types: soit à fermeture centrale avec double pêne et deux crans entaillés en vis-à-vis dans chaque tige à l'intérieur de l'arceau, soit à fermeture avec pêne et cran extérieurs à l'arceau et dans son plan, soit à fermeture à pêne latéral cylindrique 9 et un cran unique entaillé latéralement à l'arceau à l'extrémité de l'une des tiges et présentant la forme, vue de profil, d'un segment de cercle concave pour recevoir le pêne 9 de la serrure 2, soit à double fermeture avec un cran entaillé latéralement sur chaque tige du même côté par rapport au plan de l'arceau; le calage de ce pêne 9 en face du cran de la tige s'effectue par blocage des tiges de l'arceau contre la partie supérieure de la serrure 2. Ces cadenas peuvent être modifiés comme il suit pour les besoins de cette variante permettant d'obtenir un accessoire antivol articulé de longueur réglable à l'avance par l'utilisateur.

La serrure 2 peut être rendue coulissante sur les tiges 1 de son arceau, en prolongeant ses deux trous fermés formant gaine des tiges de l'arceau jusqu'à leur ouverture complète au-dessus de la serrure, pour former deux orifices 7. En entaillant d'autres crans 8 uniformément répartis en dessous du cran unique, le système peut être fermé à différentes hauteurs; dans le cas de crans en forme de segment de cercle concave, une même série de crans peut être entaillée sur l'autre tige, dans un plan opposé, pour pouvoir placer la serrure dans les deux sens; la figure 3 représente une vue de profil sous un faible angle de perspective les tiges d'un arceau de cadenas du commerce ainsi modifiées par adjonction de crans supplémentaires. L'écartement des trous 7 de tiges de la serrure doit être évidemment le même que l'écartement des tiges 1 retenu pour la fabrication de l'arceau correspondant, et cet écartement minimal est de 30 mm pour être un peu supérieur au diamètre courant d'une jante de volant.

Pour pouvoir caler la serrure à une hauteur donnée et aussi faciliter la fermeture de son pêne 9 dans les crans, des anneaux métalliques amovibles 10 sont enfilés par l'utilisateur sur la ou les tiges ainsi crantées, le premier anneau en position basse 11 étant soudé sur la tige 1 pour former une butée. Ces anneaux amovibles 10 d'un diamètre intérieur égal à celui des tiges mais tel qu'ils peuvent être rendus glissants par frottement, et d'une hauteur égale à l'espacement d'axe en axe de deux crans consécutifs, ont aussi pour but d'une part de cacher et de protéger la longueur de tiges crantées, car ces crans constituent les points faibles de la tige, et d'autre part de protéger aussi la jante du volant 3 contre les arrêtes vives des crans.

La longueur utile de l'accessoire antivol articulé peut ainsi varier largement, mais est limitée par le dépassement, peu esthétique et peut être contraire aux normes de sécurité, des tiges au-dessus de la serrure.

Ainsi, on peut par exemple obtenir une longueur utile de l'accessoire antivol articulé variant de 620 mm à 728 mm en utilisant une barre métallique 4 à usage de crochet d'une longueur utile C de 370 mm et un cadenas avec tiges de 12 mm de diamètre espacées de 60 mm d'axe en axe, et 10 crans et 9 anneaux de 12 mm de hauteur par tige, dont la profondeur minimale de l'arceau avec serrure sur les anneaux fixes 11 sera de 620 − 370 = 250 mm, et dont la profondeur maximale avec serrure haute sera de 728− 370 = 358 mm. La figure 3 représente ce système avec serrure de 35 mm de hauteur placée en positions basse et haute, sans anneaux. Les longueurs utiles obtenues sont: 620 − 632 − 644 − 656 − 668 − 680 − 692 − 704 − 716 et 728 mm. En ne tenant pas compte de la hauteur de la serrure qui couvre la même hauteur de tige dans toutes ses positions, le dépassement maximal des tiges est de 728 − 620 = 108 mm lorsque la serrure est en position basse sur les anneaux fixes 11.

Pour remédier à cet inconvénient, la hauteur de dépassement des tiges et le nombre d'anneaux peuvent être très sensiblement réduits en utilisant une barre métallique 4 à usage de crochet comportant non plus une seule boucle 6 mais une boucle allongée à un ou plusieurs échelons 12 soudés à l'intérieur de cette boucle, suivant les figures 4 et 5 vues en perspective.

Pour des raisons pratiques et esthétiques, la boucle 6 de la barre métallique 4 à usage de crochet est allongée sur une longueur intérieure D maximale égale au tiers de la longueur C de la barre métallique 4; le ou les échelons métalliques 12 sont d'une section égale ou supérieure à la section de la barre métallique 4, sont solidarisés perpendiculairement sur les côtés de la boucle et sont espacés, pour éviter les recouvrements inutiles ou les discontinuités dans les positions de la serrure, de telle façon que le décalage E soit égal à la longueur F comprise entre le bas d'un anneau fixe 11 et le bas de la serrure 2 lorsqu'elle est en position haute sur le cran d'extrêmité de la tige, la longueur maximale utile C de la barre métallique 4 à usage de crochet restant limitée par la distance volant-pédale du véhicule.

Selon la forme de réalisation préférentielle faisant l'objet des figures 4 et 5, l'utilisation d'un cadenas à 5 positions correspondant à 5 crans et à 4 anneaux amovibles de 12 mm de hauteur par tige 1 et dont la profondeur utile minimale de l'arceau est portée de 250 à 310 mm par la suppression sur 60 mm des 5 crans inférieurs du cadenas précédent, combinée avec une barre métallique 4 de longueur C toujours égale à 370 mm à usage de crochet dont la boucle allongée 6 présente la même longueur et la même largeur intérieures que le crochet 5, soit respectivement 100 mm et 30 mm, avec un seul échelon 12 de 20 mm de largeur dont la partie inférieure est placée à une distance E de 60 mm sous la première boucle, permet d'obtenir les positions suivantes:

1. Avec l'accrochage de l'arceau du cadenas sur l'échelon 12 de la boucle soit à une distance de 370 − 60 = 310 mm de la pédale suivant la figure 4: 620 − 632 − 644 − 656 et 668 mm avec un dépassement maximal des tiges réduit de 60 mm c'est-à-dire, en ne tenant pas compte de la hauteur de la serrure, de 668 − 620 = 48 mm au lieu de 108 mm en position basse de la serrure 2 sur les anneaux fixes 11.

2. Avec l'accrochage de l'arceau du cadenas sur la boucle supérieure suivant la figure 5: 680 − 692 − 704 − 716 et 728 mm, le dépassement maximal des tiges restant de 728 − 680 = 48 mm en position basse de la serrure sur les anneaux fixes 11.

Dans cette forme de réalisation préférentielle, la barre métallique 4 à usage de crochet peut se replier à l'intérieur du cadenas quand la serrure est en position haute. Il devient aussi possible de solidariser sur cette serrure, un capuchon 13 pour cacher les tiges, évidé ou plein en alliage métallique léger ou en matière plastique rigide mais avec deux trous intérieurs correspondant aux tiges à cacher, d'une hauteur de l'ordre de 50 mm et d'une longueur et largeur égales à celles de la serrure 2; en utilisant un cadenas à serrure d'une hauteur de 35 mm, la hauteur totale de la serrure est ainsi portée à 85 mm.

Pour faire apparaître le détail des crans, les anneaux amovibles 10 des figures 4 et 5 sont enlevés sur la tige 1 de l'arceau recevant le pêne 9, le cadenas étant retourné sur la figure 5 par rapport à la figure 4.

Selon une autre variante, la barre métallique 4 à usage de crochet peut être remplacée par deux tiges métalliques rectilignes, l'une mâle ronde filetée dont le diamètre nominal est compris entre 8 et 14 mm, l'autre femelle taraudée ou dont le taraudage est remplacé par un ou des écrous intérieurs d'un diamètre intérieur correspondant au diamètre nominal de la tige mâle suivant les systèmes connus du commerce, chaque tige étant munie par soudure ou par façonnage de la tige à son extrémité non filetée ou taraudée soit d'un crochet 5, soit d'une boucle 6 de façon à obtenir, après vissage ensemble des deux tiges, une nouvelle barre métallique à usage de crochet mais de longueur variable.

## Revendications

1. Accessoire antivol articulé pour véhicules à moteur et à volant de direction (3) assurant une liaison mécanique volant-pédale de commande caractérisé par un cadenas antivol dont l'arceau est une tige métallique rigide (1) recourbée en forme de U et munie de un ou plusieurs crans (8) à une ou à ses deux extrêmités, avec un moyen de fermeture constitué par une serrure (2) avec capuchon (13) et dont les deux trous de tiges (7) sont soit fermés soit ouverts au-dessus de la serrure qui peut alors coulisser avec un calage par anneaux amovibles (10) retenus par des anneaux fixes (11), et par une barre métallique rectiligne (4) ou par deux tiges métalliques rectilignes l'une filetée l'autre tauraudée, dont l'extrémité supérieure est façonnée en forme de boucle fermée (6) simple ou multiple avec un ou des échelons métalliques intérieurs (12), qui est traversée et maintenue par la base cintrée de l'arceau du cadenas constituant l'axe d'articulation du système et dont l'extrêmité inférieure est façonnée dans le même plan que la ou les boucles (6), en forme de crochet (5) destiné à être accroché sous le levier d'une pédale de commande du véhicule avant la fermeture du cadenas sur le bas de la jante du volant (3).

2. Accessoire selon la revendication 1 caractérisé en ce que le diamètre des tiges (1) de l'arceau du cadenas et de la barre métallique (4) à usage de crochet est compris entre 8 et 16 mm et en ce que la longueur maximale utile (C) de la barre métallique (4) est limitée par la distance volant-pédale du véhicule.

3. Accessoire selon la revendication 1 caractérisé en ce que le diamètre intérieur de la ou des boucles fermées (6) de la barre métallique (4) à usage de crochet est supérieur au diamètre de la tige métallique (1) formant l'arceau du cadenas et est égal au plus à la largeur (B) du crochet (5), et en ce que la longueur intérieure (D) maximale totale de la ou des boucles (6) est égale au tiers de la longueur utile (C) de la barre métallique (4).

4. Accessoire selon la revendication 1 caractérisé en ce que la profondeur utile (A) du crochet (5) est comprise entre 90 et 150 mm et en ce que son ouverture ou largeur utile (B) est comprise entre 20 et 80 mm.

5. Accessoire selon la revendication 1 caractérisé en ce que les deux trous (7) de la serrure (2) recevant les tiges (1) de l'arceau sont ouverts sur toute la hauteur de la serrure de façon à former chacun un orifice d'un diamètre très légèrement supérieur à celui des tiges de l'arceau, et en ce que leur écartement est le même que celui des tiges (1) de l'arceau qui est au minimum de 30 mm.

6. Accessoire selon la revendication 1 caractérisé en ce que les crans (8) sont uniformément répartis et entaillés suivant la même forme que ceux des cadenas du commerce sur une partie de la longueur rectiligne de chaque tige (1) de l'arceau, à partir de leur extrêmité, soit en vis-à-vis ouverts à l'intérieur ou à l'extérieur de l'arceau, soit latéralement et en sens contraire par rapport au plan de l'arceau, soit latéralement et du même côté par rapport au plan de l'arceau.

7. Accessoire selon la revendication 1 caractérisé en ce que le ou les échelons métalliques intérieurs (12) de la boucle (6) sont d'une section égale ou supérieure à la section de la barre métallique (4) et sont soudés perpendiculairement aux côtés de la boucle (6) avec un espacement tel que la longueur utile (E) de décalage soit égale à la longueur (F) comprise entre le bas d'un anneau fixe (11) et le bas de la serrure (2) lorsque celle-ci est placée en position haute sur le cran d'extrêmité de tige.

8. Accessoire selon la revendication 1 caractérisé en ce que le pêne (9) de la serrure (2) est calé en face des crans (8) par la pose, sur les tiges (1) de l'arceau, d'anneaux métalliques amovibles (10) dont le diamètre intérieur est tel qu'ils puissent coulisser par frottement sur les tiges de l'arceau, et dont la hauteur est égale à l'espacement d'axe en axe de deux crans (8) consécutifs ces anneaux étant eux-mêmes calés par un anneau (11) fixe soudé sur chaque tige et formant une butée.

9. Accessoire selon la revendication 1 caractérisé en ce que la serrure (2) est recouverte d'un capuchon fixe (13) métallique ou en matière plastique rigide d'une profondeur suffisante pour cacher les tiges (1) de l'arceau, lorsque la serrure (2) est placée en position basse sur les anneaux fixes (11), et d'une longueur et d'une largeur égales à celles de la serrure (2).

10. Accessoire selon la revendication 1 caractérisé en ce que la barre métallique (4) à usage de crochet est remplacée par deux tiges métalliques rectilignes, l'une mâle ronde filetée d'un diamètre nominal de 8 à 14 mm, l'autre femelle taraudée ou dont le taraudage est remplacé par un ou des écrous intérieurs, le diamètre nominal intérieur correspondant au diamètre nominal de la tige mâle suivant les systèmes connus du commerce, chaque tige étant munie à son extrêmité non filetée ou non taraudée soit d'un crochet (5) soit d'une boucle (6) pour obtenir, après vissage ensemble des deux tiges, une nouvelle barre métallique à usage de crochet mais de longueur variable.

## Claims

1. Articulated antitheft accessory for vehicles having an engine and a steering wheel (3) providing a pedal-steering wheel mechanical control link characterized by an antitheft padlock whose hoop is a rigid metal rod (1), curved back in the shape of a U and provided with one or more notches (8) at one or two of its extremities, with a closing means constituted by a lock (2) with a cap (13) and whose two rod holes are either closed or open above the lock which can then slide with adjustment by moveable rings (10) retained by fixed rings (11), and by a rectilinear metal bar (4) or by two rectilinear metal bars, one being threaded and the other being tapped, whose upper extremity is shaped like a simple or multiple closed loop (6) with one or more interior metal spokes (12), which is traversed and maintained by the curved base of the hok of the padlock constituting the hinge bolt or pin of the system and whose lower extremity is shaped in the same plane as the loop(s) in the form of a hook (5) intended to be hooked under the lever of a control pedal of the vehicle before closing the padlock on the bottom part of the steering wheel rim (3).

2. An accessory according to claim 1, wherein the diameter of the rods (1) of the padlock hoop and the metal bar (4) used as a hook is between 8 and 16 mm and the maximum effective length (C) of the metal bar (4) is limited by the steering wheel-pedal distance of the vehicle.

3. An accessory according to claim 1, wherein the internal diameter of the closed loop(s) (6) of the metal bar (4) used as a hook is greater than the diameter of the metal rod (1) forming the padlock hoop and is at the most equal to the width (B) of the hook (5), and wherein the total maximum internal length of the loop(s) (6) is equal to one third of the effective length (C) of the metal bar (4).

4. An accessory according to claim 1, wherein the effective depth (A) of the hook (5) is between 90 and 150 mm and wherein its opening or effective width (B) is between 20 and 80 mm.

5. An accessory according to claim 1, wherein the two holes (7) of the padlock (2) receiving the rods (1) of the hoop are open over the full height of the lock so as to each form an orifice having a diameter slightly greater than that of the rods of the hoop, and wherein their spacing is the same as the rods (1) of the hoop which at least is 30 mm.

6. An accessory according to claim 1, wherein the notches (8) are evenly distributed and indented according to the same form as those of commercial padlocks over one part of the rectilinear length of each rod (1) of the hoop, from their extremity, either opposite them open inside and outside the hoop, or laterally and in the opposite direction with respect to the plane of the hoop, or laterally and of the same dimension with respect to the plane of the hoop.

7. An accessory according to claim 1, wherein the internal metal spokes (12) of the loop (6) are with a section equal to or greater than the section of the metal bar (4) and are welded perpendicularly to the sides of the loop (6) with a spacing so that the effective displaced length (E) is equal to the length (F) between the bottom part of a fixed ring (11) and the bottom part of the lock (2) when the latter is placed on the top of the notch rod extremity.

8. An accessory according to claim 1, wherein the sliding bolt (9) of the lock (2) is wedged opposite the notches (8) by laying on the rods (1) of the hoop moveable metal rings (10) whose internal diameter is such that said rings can slide by rubbing on the rods of the hoop, and whose height is equal to the axis-to-axis spacing of two consecutive notches (8), these rings themselves being wedged by a fixed ring (11) welded on each rod and forming a stop.

9. An accessory according to claim 1, wherein the lock (2) is covered with a fixed metal or rigid plastic cap (13) of sufficient depth so as to hide the rods (1) of the hoop when the lock (2) is placed at the bottom position on the fixed rings (11), and with a length and width equal to those of the lock (2).

10. An accessory according to claim 1, wherein the metal bar (4) to be used as a hook is replaced by two rectilinear metal rods, one round threaded rod with a nominal diameter of 8 to 14 mm and one female tapped rod or whose internal screw thread is replaced by one or more internal nuts, the internal nominal diameter corresponding to the nominal diameter of the male rod according to known commercial systems, each rod being provided at its non-threaded or untapped extremity with a hook or a loop (6) so that, after screwing of the two rods assembly, a new metal bar to be used as a hook, but of variable length, is obtained.

**Patentansprüche**

1. Gelenktes Diebstahlsicherungszusatzgerät für Fahrzeuge mit Motor und Lenkrad (3) zur mechanischen Verbindung von Lenkrad und Bedienungspedal, gekennzeichnet durch ein Diebstahlsicherungsschloß, dessen Bügel einen steifen, U-förmigen Metallstab (1) und mehreren Rastkerben (8) an einem oder an beiden Enden besitzt, und einer Verschließvorrichtung, die sich aus einem Schloß (2) mit Abdeckung (13) zusammensetzt und deren beide Stangeneinführlöcher (7) über dem Schloß offen oder geschlossen sind und über eine Verkeilung aus abnehmbaren Ringen (10), die durch feste Ringe (11) festgehalten werden, hin und her gleiten kann, sowie durch eine gerade Metallstange (4) oder zwei gerade Metallstäbe von denen einer mit Innengewinde und der andere mit Außengewinde versehen ist und deren oberes Ende eine einfache oder mehrfache geschlossene Schleife (6) bildet, mit einem oder mehreren Innengliedern aus Metall (12), welche vom gekrümmten Ansatz des Bügels des Diebstahlsicherungsschlosses durchquert und festgehalten wird, das die Gelenkachse des Systems bildet, und deren unteres Ende auf der gleichen Fläche liegt wie die Schleife(n) (6), in Form eines Hakens (5) zum Unterhaken eines der Bedienpedale des Fahrzeugs, bevor das Schloß auf der Unterseite des Lenkradbügels (3) abgeschlossen wird.

2. Zusatzgerät gemäß Patentanspruch 1, dadurch gekennzeichnet, daß der Durchmesser der Stäbe (1) des Bügelschlosses und der Metallstange (4) zur Aufnahme der Rastkerben 8 und 16 mm beträgt und die maximale Nutzlänge (C) der als Haken dienenden Metallstange (4) durch den Abstand Lenkrad-Pedal begrenzt wird.

3. Zusatzgerät gemäß Patentanspruch 1, dadurch gekennzeichnet, daß der Innendurchmesser der geschlossenen Schleife(n) (6) der als Haken dienenden Metallstange (4) größer ist als der des Metallstabs, der den Schloßbügel bildet, und mindestens ebenso groß ist wie die Breite (B) des Hakens (5), sowie dadurch, daß die maximale Gesamtinnenlänge (D) der Schleife(n) (6) ein Drittel der Nutzlänge (C) der Metallstange (4) beträgt.

4. Zusatzgerät gemäß Patentanspruch 1, dadurch gekennzeichnet, daß Nutztiefe (A) des Hakens (5) zwischen 90 und 150 mm beträgt und ihre Öffnung oder Nutzbreite (B) zwischen 20 und 80 mm beträgt.

5. Zusatzgerät gemäß Patentanspruch 1, dadurch gekennzeichnet, daß die beiden Löcher (7) des Schlosses (2) zur Aufnahme der Stäbe (1) des Bügels über die gesamte Höhe des Schlosses geöffnet sind, sodaß jedes eine Öffnung bildet, deren Durchmesser leicht über dem der Bügelstäbe liegt und ihr Abstand derselbe ist wie der der Stäbe (1) vom Bügel, welcher mindestens 30 mm beträgt.

6. Zusatzgerät gemäß Patentanspruch 1, dadurch gekennzeichnet, daß die Rastkerben (3) gleichmäßig verteilt und eingearbeitet sind und auf einem Teil des geradlinigen Abschnittes des Bügelstabes (1) der Form handelsüblicher Diebstahlssicherungsschlösser entsprechen, entweder als gegenüberliegende Öffnungen auf der Innen- oder Außenseite des Bügels, oder seitlich und gegenüber der Bügelfläche bzw. seitlich und auf derselben Seite wie die Bügelfläche.

7. Zusatzgerät gemäß Patentanspruch 1, dadurch gekennzeichnet, daß das oder die inneren Metallglieder (12) der Schleife (6) einen Durchschnitt haben, der mindestens ebensogroß ist wie der der Metallstange (4) und rechtwinklig seitlich an die Schleife (6) in solchem Abstand angeschweißt sind, daß die Nutzlänge (E) für das Versetzen der Länge (F) zwischen der Unterseite eines festen Ringes (11) und der Unterseite des Schlosses (2) entspricht, wenn sich dieses in der obersten Rastkerbe auf dem Stab befindet.

8. Zusatzgerät entsprechend Patentanspruch 1, dadurch gekennzeichnet, daß der Riegel (9) des Schlosses (2) gegenüber den Rastkerben (8) durch das Anbringen beweglicher Metallringe (10) auf den Bügelstangen (1) verkeilt wird, wobei die Ringe so bemessen sind, daß die Ringe unter Reibung auf den Stäben hin und her gleiten und ihre Höhe dem Abstand von Achse zu Achse von zwei aufeinanderfolgenden Rastkerben (8) entspricht, wobei die beweglichen Ringe wiederum durch einen an jedem Stab fest angeschweißten Ring (11) festgehalten werden, der einen Anschlag bildet.

9. Zusatzgerät gemäß Patentanspruch 1, dadurch gekennzeichnet, daß das Schloß (2) durch eine feste Metall- oder Kunststoffabdeckung (13) abgedeckt ist, deren Tiefe ausreichend bemessen ist, um die Bügelstäbe (1) zu verdecken, wenn sich das Schloß (2) in der unteren Position auf den festen Ringen (11) befindet, und deren Länge und Breite den Abmessungen des Schlosses (2) entsprechen.

10. Zusatzgerät gemäß Patentanspruch 1, dadurch gekennzeichnet, daß die als Haken dienende Metallstange (4) durch zwei gerade Metallstäbe ersetzt wird, deren einer mit einem Außengewinde von 8–14 mm Nennwert und der andere mit einem Innengewinde versehen ist, das aus 1 oder 2 Innenmuttern besteht, deren Innendurchmesser dem Außendurchmesser des anderen Stabes nach den handelsüblichen Systemen entspricht, wobei jeder Stab an seinem gewindelosen Ende entweder einen Haken (5) bzw. eine Schleife (6) besitzt, wodurch beim Zusammenschrauben der beiden Stäbe eine als Haken dienende Stange mit verstellbarer Länge gebildet wird.

**FIG.1**

**FIG.2**

FIG.3    FIG. 4    FIG.5